# EUROPEAN PATENT SPECIFICATION

(11) **EP 2 445 706 B1**
(45) Date of publication and mention of the grant of the patent: **04.05.2016**
(21) Application number: 09846636.0
(22) Date of filing: 26.06.2009
(51) Int. Cl.: B29D 30/00

(54) **A SYSTEM COMPRISING A DEVICE FOR RETAINING A TREAD BAND DURING TIRE RETREADING AND A TREAD BAND THEREFOR**
KOMBINATION EINER VORRICHTUNG ZUR BEWAHRUNG EINES REIFENPROFILS WÄHREND DER RUNDERNEUERUNG EINES REIFENS UND EINER LAUFFLÄCHE DAFÜR
COMBINAISON D'UN DISPOSITIF POUR MAINTENIR UNE BANDE DE ROULEMENT AU COURS DU RECHAPAGE D'UN PNEUMATIQUE ET D'UNE BANDE DE ROULEMENT ASSOCIÉE

(43) Date of publication of application: 02.05.2012
(73) Proprietor: MICHELIN Recherche et Technique S.A., 1763 Granges-Paccot (CH); Compagnie Générale des Etablissements Michelin, 63000 Clermont-Ferrand (FR)
(72) Inventor: PANNING, Nathan, J., Simpsonville, SC 29681 (US)
(74) Representative: Dossmann, Gérard
(86) International application number: PCT/US2009/048759
(87) International publication number: WO 2010/151263

(56) References cited:
- EP-A1- 1 400 343
- US-A- 1 441 262
- US-A- 3 884 740
- US-A- 4 098 936
- US-A- 4 174 239
- US-A- 4 309 234
- US-A- 4 626 300
- US-A- 5 053 094
- US-A- 5 868 880
- US-B2- 6 916 163

## Description

### FIELD OF THE INVENTION

The present invention relates to an improvement in tire retreading and, more specifically, to a new device for constraining a tread band onto the tire casing during retreading operations without requiring enclosure of the tread area.

### BACKGROUND OF THE INVENTION

In one type of tire retreading operation, a worn tread is stripped or buffed from the crown of the tire casing and a new tread rubber is bonded in place. A new, cured tread band is placed on the tire casing with a bonding layer of, for example, gum rubber placed between the crown of the tire casing and the cured tread band. In order to cure the bonding material and any other uncured portions of the tire casing, traditionally the entire assembly is enclosed within a curing membrane, evacuated, and placed into an autoclave for heat and pressure treatment. The curing membrane acts to hold the tread against the casing and, due to the presence of a vacuum within the membrane, also assists in molding or smoothing the surface of the uncured bonding material used for joining the tread to the casing. The membrane can also assist in smoothing other locations such as repaired areas on the tire. The vacuum also assists in evacuating gases trapped in the casing or in a repair between the casing and the tread.

The use of a curing membrane presents certain challenges in tire retreading operations. The entire tire assembly, including the tread rubber, must be placed within a relatively tight fitting membrane. This step can be manually intensive. Also, because the membrane envelopes the entire tire assembly and acts as an insulator, more energy is required to properly heat the assembly and achieve vulcanization. The impact of this insulation on curing can be particularly significant for the tread because the vacuum present between the tread grooves and the membrane further reduces the flow of heat into the bonding material. While necessary to affix the tread to the buffed tire, the pressure of the membrane or tension therein can also sometimes deform the tread undesirably. Finally, the membranes are relatively expensive and tend to have a short life.

European patent application EP 1400343 - A discloses a device for maintaining a tread band onto a tire during retreading operations, the tire defining a crown, bead portions and sidewalls extending between the bead portions and crown, the tread band being positioned onto the crown of the tire and defining a tread region, the device comprising:
- at least one pair of opposing connectors, each said connector positioned on a lateral side of the tread band;
- at least one pair of fastening elements, each said fastening element attached to one of said opposing connectors; and
- at least one membrane connected to said fastening elements and extending over at least a portion of the sidewalls of the tire and away from the tread band without enclosing the tread region of the tire.

Therefore, a device for fixing the tread rubber against the tire casing while providing improvements in heat transfer, membrane life, handling, and other benefits would be useful.

### SUMMARY OF THE INVENTION

Objects and advantages of the invention will be set forth in part in the following description, or may be obvious from the description, or may be learned through practice of the invention.

In one exemplary embodiment, the present invention provides a system as defined in claim 1, for maintaining a tread band onto a tire during retreading operations. The tire defines a crown, bead portions, and sidewalls extending between the bead portions and crown. The tread band is positioned onto the crown of the tire and defines a tread region. The device includes a pair of opposing connectors with each connector positioned on a lateral side of the tread band. A pair of fastening elements are included, and each fastening element is attached to one of the opposing connectors. At least one membrane is connected to the fastening elements and extends over at least a portion of the sidewalls of the tire and away from the tread band without enclosing the tread region of the tire. The membrane and the fastening elements are configured to provide a tensioning force that holds the tread band onto the tire.

Various additions or modifications can be made to this exemplary embodiment of the invention. Preferred embodiments of the invention are defined in the dependent claims. For example, the membrane may extend over the bead portions and through the interior of the tire. The opposing connectors may each include a projection positioned along a lateral side of the tread band and extending circumferentially around the tire. Alternatively, the opposing connectors may each include a tread feature configured for complementary attachment with one of the fastening elements. The fastening elements may be formed integrally with the membrane or may be formed as a separate element that connected with or attached to the membrane.

Additionally, each of the pair of opposing connectors may include a projection extending from the tread band along a lateral side of the tread band, and each of the fastening elements may include a hook-like element for attachment to the projection. Alternatively, each of the pair of opposing connectors may include a recess positioned along the tread band, and each of the fastening elements may include a finger for receipt into the recess.

In another exemplary embodiment of the invention, a device is provided for maintaining a tread band onto a tire during retreading operations. The tire defines a crown, bead portions, and sidewalls extending between the bead portions and crown. The tread band is positioned onto the crown of the tire and defines a tread region. The device includes a pair of opposing connectors with each connector positioned on a lateral side of the tread band; a pair of fastening elements, with each fastening element attached to one of the opposing connectors; and a pair of membranes, with each membrane connected to one of the fastening elements. Each membrane extends along at least a portion of one of the sidewalls of the tire and away from the tread band without enclosing the tread region of the tire. The membranes, the fastening elements, or both are configured to provide a tensioning force holding the tread band onto the tire.

A pair of base rings may also be provided with this exemplary embodiment. In such case, each base ring is positioned along a sidewall of the tire, and the membranes extend between one of the connectors and one of the base rings. Additionally, a pair of lips may also be provided with each lip positioned proximate to one of the base rings and configured for receipt of one of the bead portions of the tire. Each membrane may also include a port for the introduction of a vacuum between each membrane and the tire.

In still another exemplary embodiment, the present invention provides a device for maintaining a tread band onto a tire during retreading operations. The tire includes sidewalls and bead portions. The tread band is positioned onto the tire and defines a tread region. The device includes a pair of connectors with each connector defined along a lateral side of the tread band and extending circumferentially around the tire; a pair of fastening elements with each fastening element attached to one of the opposing connectors; and a pair of membranes with each membrane connected to one of the fastening elements. Each membrane extends along a sidewall of the tire so as to enclose the sidewalls and bead portions of the tire within the membranes without enclosing the tread region of the tire. The membranes, the fastening elements, or both are configured to provide a tensioning force holding the tread band onto the tire.

This exemplary embodiment may also include a pair of disks attached to each of the membranes. As such, the disks are positioned along the axis of rotation of the tire and may include apertures for the introduction of fluids such as hot air or steam into the interior of the tire.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Figs. 1-3 are cross-sectional views, taken along the meridian plane of a tire, illustrating exemplary embodiments of the present invention. As used herein, meridian plane refers to a plane containing the axis of rotation of the tire.
Figs. 4-5 are perspective and cross-sectional views of additional exemplary embodiments of the present invention.
Figs. 6-9 are partial, cross-sectional views, taken along the meridian plane of a tire, illustrating still other exemplary embodiments of the present invention.

### DETAILED DESCRIPTION

To provide advantageous improvements as described herein, the present invention provides a device for maintaining the position of a tread band against a tire (i.e. tire casing) during retreading operations without enclosing the entire tread region of the tread band in an insulating envelope. For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

As used herein, "meridian plane" refers to a plane containing the axis of rotation of a tire, and "equatorial plane" refers to the plane that is perpendicular to the tire's axis of rotation and passes through the center of the tire's tread.

The use of similar reference numerals between the figures is intended to represent the same or analogous features among the various exemplary embodiments of the invention.

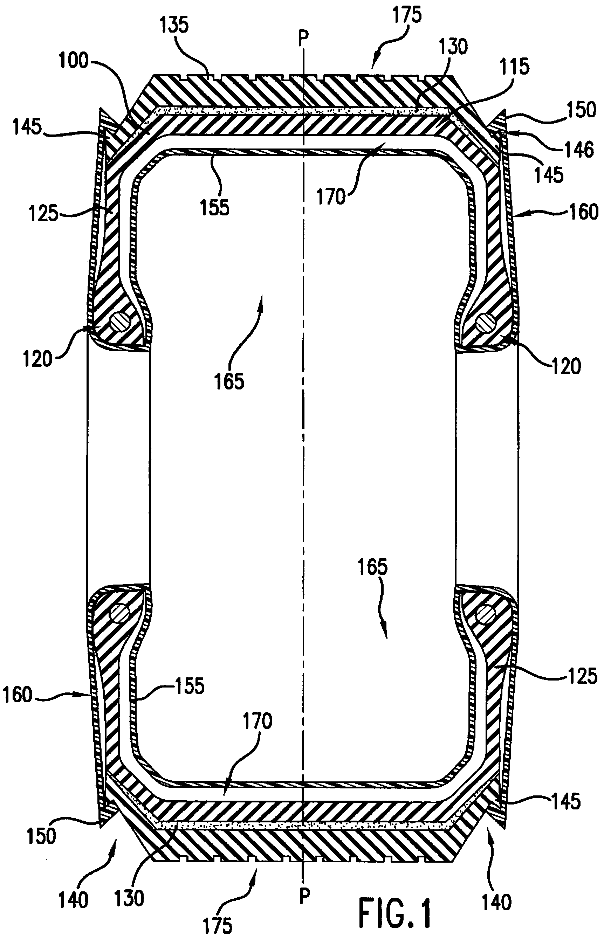

Fig. 1 provides a cross-section view of an exemplary embodiment of a retaining device 160 of the present invention. Tire 100 represents a casing that has been prepared for retreading operations by e.g., buffing the crown 115 of the casing to remove worn tread and by performing other repairs as needed. Tire 100 includes a pair of bead portions 120 located on opposing sides (i.e. opposite sides of the equatorial plane P) of the tire. Also on each side of tire 100, sidewalls 125 extend between the crown 115 and bead portions 120. A layer of uncured bonding material 130 is disposed between a tread band 135 and crown 115.

During processing steps in which heat and pressure will be applied, bonding material 130 will join tread band 135 to crown 115. In order to maintain the position of the tread band 135 for this part of the retreading operation, exemplary retaining device 160 of the present invention provides a clamping or tensioning force that pulls on each of the lateral sides 140 of tread band 135. More specifically, each lateral side 140 of tread band 135 includes at least one of a pair of opposing connectors 145 - i.e., connectors 145 are located on each side of the equatorial plane P of tire 100. For the exemplary retaining device 160 of Fig. 1, connectors 145 are constructed as a projection 146 extending circumferentially along each lateral side 140 of tread band 135. Fastening elements 150 attach to each connector 145. Fastening elements 150 are in turn attached to (or may be formed integrally with) a membrane 155 that extends along sidewalls 125 of tire 100. For the exemplary embodiment of Fig. 1, membrane 155 also passes into the interior cavity 165 of tire 100 and extends through the equatorial plane P to span between opposing connectors 145. Together, fastening elements 150 and membrane 155 provide a tensioning force to pull tread band 135 against crown 115. As such, the position of tread band 135 can be maintained during retreading operations.

During retreading operations, a vacuum can be applied to the space 170 located between membrane 155 and tire 100. Such vacuum will pull membrane 155 against tire 100 and assist with molding or smoothing the exterior and interior of tire 100 as heat and pressure are applied. For example, at the interface between tread band 135 and tire 100, membrane 155 can help smooth the bonding material 130. A vacuum in space 170 will also contribute to the tensioning force provided to tread band 135 by membrane 155 and fastening element 150.

Membrane 155 may be constructed from a variety of materials including e.g., various rubbers, polymers, and composite materials. The resiliency of membrane 155 allows it to be stretched so as to attach fastening elements 150 to connectors 145 while maintaining a tensioning force. Fastening elements 150 may be formed integrally with the membrane 155 as illustrated in Fig. 1. Alternatively, fastening elements 150 may be constructed separately and then attached to or inserted within membrane 155. For example, fastening elements 150 may include a hook-shape as shown in Fig. 1. However, other constructions for connectors 145 and fastening elements 150 will be discussed below and one of skill in the art, using the teachings disclosed herein, will understand that a variety of constructions could be used to attach the membrane to the sides of the tread band.

Notably, membrane 155 does not cross the tread region 175 of tread band 135. More specifically, while membrane 155 may overlap a portion of the tread band 135 along lateral sides 140 including portions of the tread region 175, membrane 155 does not extend over the tread band 135 so as to envelope the tread region 175. As such, membrane 155 does not insulate tread band 135 when tire 100 is placed into e.g., an autoclave for heating in order to vulcanize or activate bonding material 130 and does not create vacuum pockets in the features of tread region 175. As a result, less energy is required to cure bonding material 130 because heat can now be directly applied to tread region 175. Additionally, because membrane 155 does not contact tread region 175, the vacuum applied to space 170 will not pull membrane 155 against the tread region 175 in a manner that could cause distortion of tread region 175 or create unwanted wear on membrane 155.

As described with regarding to the exemplary embodiment of Fig. 1, connectors 145 are created as a projection 146 extending circumferentially around the tire. It should be understood, however, that each of the opposing connectors could be constructed as a series or plurality of separated features spaced apart along the lateral sides 140 of tread band 135. In complementary fashion, fastening elements 150 could be constructed as a plurality of separate elements that are spaced apart along the membrane 155 for attachment with connectors 145. Fastening elements 150 could be also be reinforced with e.g., spokes extending radially along the membrane or a ring extending circumferentially along the membrane. One of skill in the art, using the teaching disclosed herein will understand that multiple variations fall with the scope of the present invention to apply a tensioning force (i.e., a force along the radial, circumferential, and/or axial directions of the tire) to maintain the position of a tread band upon a tire.

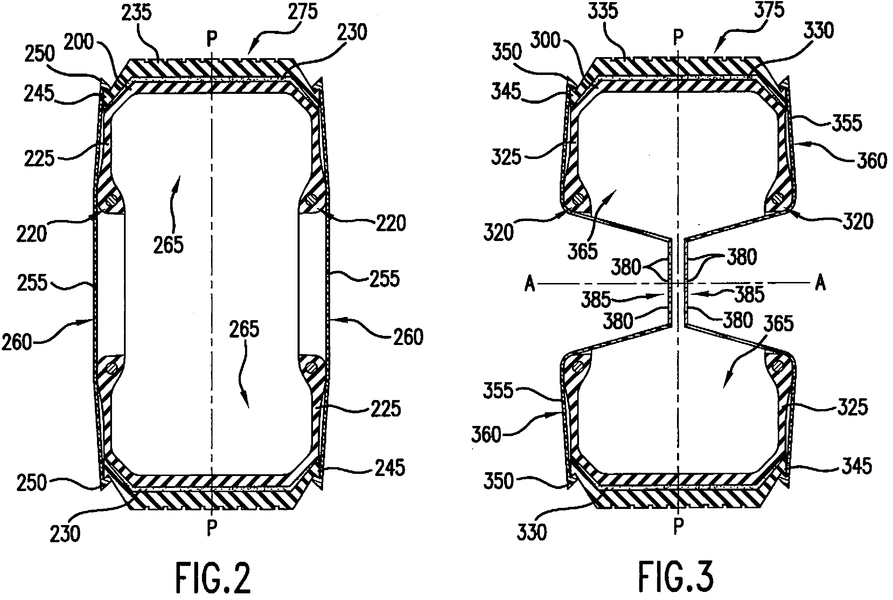

Fig. 2 provides another exemplary embodiment of a retaining device 260 that operates to maintain the position of tread band 235 on the casing of tire 200. Device 260 includes a pair of membranes 255 that extend between fastening elements 250 and attach to connectors 245. In a manner different than the exemplary embodiment of Fig. 1, each membrane 255 spans between connectors 245 that are positioned on same side of the equatorial plane P of tire 200, and neither membrane 255 intersects the equatorial plane P. As with the embodiment of Fig. 1, membrane 255 applies a tensioning force to the tread band 235 that can be increased by the introduction of a vacuum into the interior 265 of tire 200 and/or into the space between membrane 255 and sidewalls 225.

Referring now to Fig. 3, retaining device 360 also includes a pair of membranes 355 that each extend between fastening elements 350 located along one side of the equatorial plane P. Each membrane 355 includes a disk 385 centrally located along the axis A of tire 300. After attaching membrane 355 to each side of tire 300, disks 385 can be moved towards one another and held in place by e.g., clamping or attaching the disks 385 together. In addition to increasing the tensioning force applied to tread band 335, the movement of disks 385 towards one another also provides a seal between each membrane 355 and bead portions 320. This sealing effect allows a vacuum to be created between the membranes 355 and their respective sidewall portions 325. At the same time, apertures 380 in each disk 385 allow for the introduction of heated gases into the interior 365 of tire 300 to further expedite the heating and curing of uncured materials such as e.g., bonding material 330.

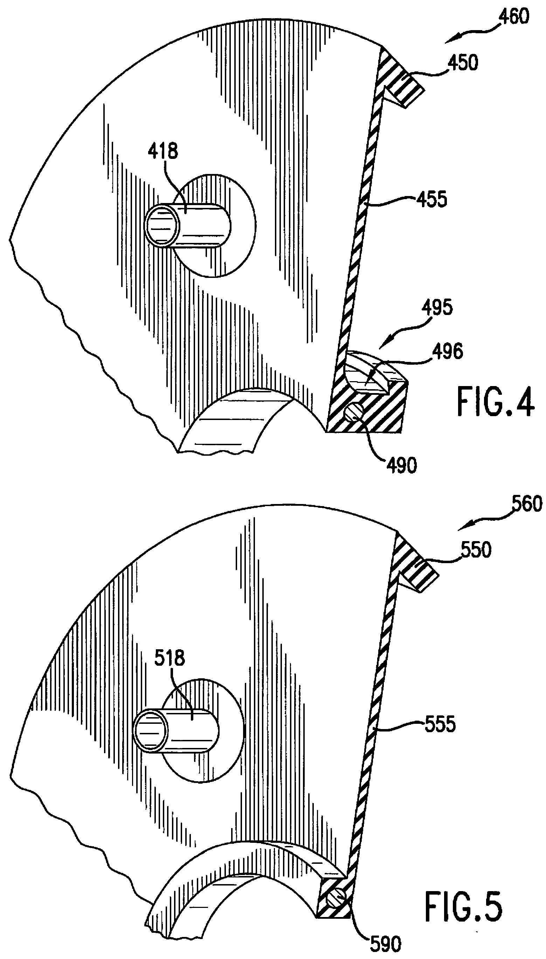

Another exemplary retaining device 460 is illustrated in Fig. 4. For purposes of providing further clarity, retaining device 460 is shown unattached to a tire. In a manner similar to previous embodiments, device 460 includes a connector 450 for engaging a lateral side of a tread band. A membrane 455 extends between connector 450 and a base ring 490. Base ring 490 provides further reinforcement for the application of a tension to a tread band using connector 450 and membrane 455. As shown in Fig. 4, base ring 490 is integrated into the membrane 455 but other constructions such as, e.g., attaching ring 490 to the surface of membrane 455 may also be used.

Adjacent to base ring 490, device 460 includes a lip 495 with a sealing surface 496 that is configured for the receipt of a bead portion of a tire. As such, lip 495 can be used to further enhance the sealing capability of device 460 during vacuum operations. Illustrated here by way of example, port 418 allows for the introduction of a vacuum between membrane 455 and a tire. A similar port may be used with the other exemplary embodiments of the invention described herein.

In an alternative to the exemplary embodiment of a retaining device 460, Fig. 5 illustrates a similar retaining device 560 without a lip and sealing surface for receipt of a bead portion. Device 560 stills include a base ring 590 for reinforcement in providing a tensioning force to a tread band. Base ring 590 may be constructed of, for example, a reinforced composite or rubber.

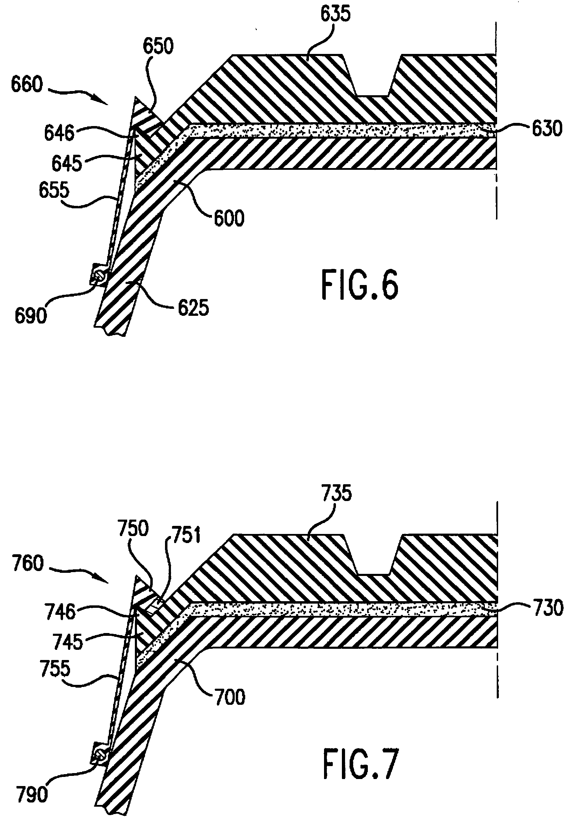

The membrane is not required to extend down the entire length of the sidewall of the tire. For example, Fig. 6 shows an exemplary embodiment of a retaining device 660 where the membrane 655 is considerably shortened relative to previously described embodiments. More specifically, the distance between fastening element 650 and the base ring 690 does not extend over the entire length of the sidewall 625 of tire 600. Instead, membrane 655 is much shorter. However, in conjunction with a relatively inextensible base ring 690, device 660 can still be used to apply an effective tensioning force to maintain the position of tread band 635 against the casing of tire 600. In addition, under application of a vacuum between membrane 655 and tire 600, membrane 655 will provide a smooth surface to help mold bonding material 630 when heat is applied during the curing process.

Variations in the shape and respective functions of the connectors and fastening elements are also within the scope of the present invention. For example, in Fig. 7 retaining device 760 includes a retaining ring 751 that extends circumferentially about tire 700. Ring 751 provides a tension force that can be used to maintain the position of tread band 735 on tire 700. As such, if necessary, ring 751 can be applied earlier in the retreading process to secure tread band 735 into position. Retaining device 760 includes a membrane 755 extending between the hook-like fastening element 750 and base ring 790. Tire 700 can therefore be cured while leaving retaining ring 751 in place or it can be removed during the curing step while using retaining device 760 to maintain the position of tread band 735.

As with previous embodiments, it should be noted that the projection 746 may be a feature of the tire that remains after the retreading process to serve as a protective and/or decorative feature around the sidewall of the tire. Alternatively, projection 746 may be trimmed away as part of the retreading process. As shown in Fig. 7, projection 746 is shaped for the receipt of the hook-like shape of connector 745. However, multiple other shapes and features may be used to provide for the application of a tensioning force to the tread band.

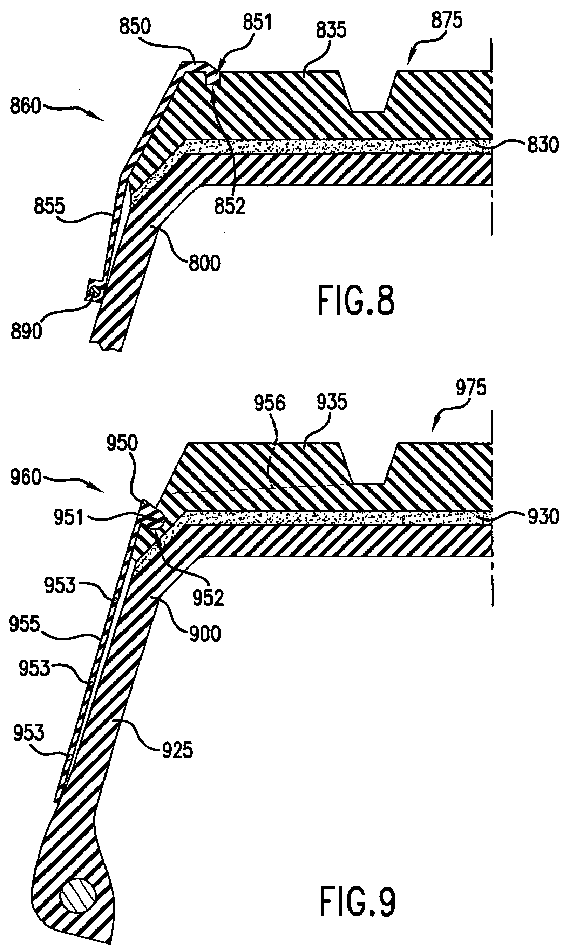

For example, the retaining device 860 of Fig. 8 uses a fastening element 850 that is connected with a tread feature 852. More specifically, tread band 835 includes a groove 852 for receipt of fastening element 850. Groove 852 may be a functional part of the tread region 875 or may be present solely for use in the retreading process. Fastening element 850 includes a finger 851 that is received in complementary fashion into groove 852. As with previous embodiments, base ring 890 is relatively inextensible and allows membrane 855 to provide a tensioning force that is transferred to tread band 835 to maintain its position relative to tire 800.

By way of additional example, Fig. 9 provides a retaining device 960 that illustrates another fastening element 950 for use in applying a tensioning force to tread band 935. Relative to the previously described embodiments, the membrane 955 of retaining device 960 extends further along the sidewall 925 of tire 900 but, unlike the embodiment of e.g., Fig. 5, does not extend to the bead portion of tire 900. Multiple reinforcing rings 953 provide additional reinforcement for the anchoring of a tensioning force applied to tread band 935. As such, the exemplary embodiment of Fig. 9 also illustrates that the length of the membrane may be varied.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A system comprising a device for maintaining a tread band (135, 235, 335, 635, 735, 835, 935) onto a tire (100, 200, 300, 600, 700, 800, 900) during retreading operations and a tread band, the tire defining a crown (115), an equatorial plane (P), bead portions (120, 130), and sidewalls (125, 225, 625, 925) extending between the bead portions and crown, the tread band being positioned onto the crown of the tire and defining a tread region (175), and defining at least one pair of opposing connectors (145) with each connector (145) being an integral part of the tread band and positioned on a lateral side of the tread band, the device comprising: at least one pair of fastening elements (150, 250, 350, 450, 650, 750, 850, 950), each said fastening element attached to one of said opposing connectors of the tread band; and at least one membrane (155, 255, 355, 455, 555, 655, 755, 855, 955) connected to said fastening elements and extending over at least a portion of the sidewalls of the tire and away from the tread band without crossing over the tread region of the tire.

2. A system comprising a device for maintaining a tread band onto a tire during retreading operations as in claim 1, the tire further defining an interior, and wherein said membrane extends over the bead portions and through the interior of the tire.

3. A system comprising a device for maintaining a tread band onto a tire during retreading operations as in claim 1 or 2, wherein said opposing connectors each comprise a projection (146) positioned along a lateral side of the tread band and extending circumferentially around the tire.

4. A system comprising a device for maintaining a tread band onto a tire during retreading operations as in claim 1 or 2, wherein said opposing connectors each comprise a tread feature (852) configured for complementary attachment with one of said fastening elements.

5. A system comprising a device for maintaining a tread band onto a tire during retreading operations as in claim or 2, wherein said pair of fastening elements are formed integrally with said membrane.

6. A system comprising a device for maintaining a tread band onto a tire during retreading operations as in claim or 2, wherein each of said pair of opposing connectors comprises a projection extending from the tread band along a lateral side of the tread band, and wherein each of said fastening elements comprises a hook-like element (750) for attachment to said projection.

7. A system comprising a device for maintaining a tread band onto a tire during retreading operations as in claim 1 or 2, wherein each of said pair of opposing connectors comprises a recess positioned along the tread band, and wherein each of said fastening elements comprises a finger (851) for receipt into said recess.

8. A system comprising a device for maintaining a tread band onto a tire during retreading operations as in claim or 2, further comprising at least one retaining ring (751) extending circumferentially around the tire and attached to at least one of said pair of opposing connectors.

9. A system comprising a device for maintaining a tread band onto a tire during retreading operations as in claim 1, wherein the fastening elements (150, 250, 350, 450, 650, 750, 850, 950), do not cross over the equatorial plane of the tire (100, 200, 300, 600, 700, 800, 900).

10. A system comprising a device for maintaining a tread band onto a tire during retreading operations as in claim 1, wherein the membrane (155, 255, 355, 455, 555, 655, 755, 855, 955) extends through the equatorial plane of the tire (100, 200, 300, 600, 700, 800, 900).

## Patentansprüche

1. Kombination einer Vorrichtung zur Bewahrung eines Reifenprofils (135, 235, 335, 635, 735, 835, 935) auf einem Reifen (100, 200, 300, 600, 700, 800, 900) während der Runderneuerungsarbeitsvorgänge und einer Lauffläche, wobei der Reifen eine Lauffläche (115), eine Äquatorebene (P), Wulstabschnitte (120, 130) und Seitenwände (125, 225, 625, 925) definiert, die sich zwischen den Wulstabschnitten und der Lauffläche erstrecken, wobei das Reifenprofil auf der Lauffläche des Reifens positioniert ist und eine Reifenprofilregion (175) definiert, und mindestens ein Paar entgegengesetzter Verbinder (145) definiert, wobei jeder Verbinder (145) ein integraler Bestandteil des Reifenprofils ist und auf einer seitlichen Seite des Reifenprofils positioniert ist, wobei die Vorrichtung Folgendes umfasst: mindestens ein Paar Befestigungselemente (150, 250, 350, 450, 650, 750, 850, 950), wobei jedes Befestigungselement an mindestens einem von den entgegengesetzten Verbindern des Reifenprofils angebracht ist; und mindestens eine Membran (155, 255, 355, 455, 555, 655, 755, 855, 955), die mit den Befestigungselementen verbunden ist und sich über mindestens einen Abschnitt der Seitenwände des Reifens und weg von dem Reifenprofil erstreckt, ohne die Reifenprofilregion des Reifens zu überkreuzen.

2. Kombination einer Vorrichtung zum Bewahren eines Reifenprofils auf einem Reifen während der Runderneuerungsarbeitsvorgänge nach Anspruch 1, wobei der Reifen ferner ein Inneres definiert und wobei die Membran sich über die Wulstabschnitte und durch das Innere des Reifens erstreckt.

3. Kombination einer Vorrichtung zum Bewahren eines Reifenprofils auf einem Reifen während der Runderneuerungsarbeitsvorgänge nach Anspruch 1 oder 2, wobei die entgegengesetzten Verbinder jeweils einen Vorsprung (146) umfassen, der entlang einer seitlichen Seite des Reifenprofils positioniert ist und sich um den Reifen umlaufend erstreckt.

4. Kombination einer Vorrichtung zum Bewahren eines Reifenprofils auf einem Reifen während der Runderneuerungsarbeitsvorgänge nach Anspruch 1 oder 2, wobei die entgegengesetzten Verbinder jeweils ein Reifenprofilmerkmal (852) umfassen, das zur ergänzenden Anbringung mit einem der Befestigungselemente ausgestaltet ist.

5. Kombination einer Vorrichtung zum Bewahren eines Reifenprofils auf einem Reifen während der Runderneuerungsarbeitsvorgänge nach Anspruch 1 oder 2, wobei das Paar Befestigungselemente einteilig mit der Membran gebildet ist.

6. Kombination einer Vorrichtung zum Bewahren eines Reifenprofils auf einem Reifen während der Runderneuerungsarbeitsvorgänge nach Anspruch 1 oder 2, wobei jeder von dem Paar von entgegengesetzten Verbindern einen Vorsprung umfasst, der sich von dem Reifenprofil entlang einer seitlichen Seite des Reifenprofils erstreckt, und wobei jedes der Befestigungselemente ein hakenähnliches Element (750) zum Anbringen an dem Vorsprung umfasst.

7. Kombination einer Vorrichtung zum Bewahren eines Reifenprofils auf einem Reifen während der Runderneuerungsarbeitsvorgänge nach Anspruch 1 oder 2, wobei jeder von dem Paar von entgegengesetzten Verbindern eine Aussparung umfasst, die entlang des Reifenprofils positioniert ist, und wobei jedes der Befestigungselemente einen Finger (851) zur Aufnahme in der Aussparung umfasst.

8. Kombination einer Vorrichtung zum Bewahren eines Reifenprofils auf einem Reifen während der Runderneuerungsarbeitsvorgänge nach Anspruch 1 oder 2, die ferner mindestens einen Haltering (751) umfasst, der sich um den Reifen umlaufend erstreckt und an mindestens einem von dem Paar von entgegengesetzten Verbindern angebracht ist.

9. Kombination einer Vorrichtung zum Bewahren eines Reifenprofils auf einem Reifen während der Runderneuerungsarbeitsvorgänge nach Anspruch 1, wobei die Befestigungselemente (150, 250, 350, 450, 650, 750, 850, 950) die Äquatorebene des Reifens (100, 200, 300, 600, 700, 800, 900) nicht überkreuzen.

10. Kombination einer Vorrichtung zum Bewahren eines Reifenprofils auf einem Reifen während der Runderneuerungsarbeitsvorgänge nach Anspruch 1, wobei die Membran (155, 255, 355, 455, 555, 655, 755, 855, 955) sich durch die Äquatorebene des Reifens (100, 200, 300, 600, 700, 800, 900) erstreckt.

## Revendications

1. Système comportant un dispositif pour maintenir une bande de roulement (135, 235, 335, 635, 735, 835, 935) sur un bandage pneumatique (100, 200, 300, 600, 700, 800, 900) pendant des opérations de rechapage et une bande de roulement, le bandage pneumatique définissant un sommet (115), un plan équatorial (P), des parties formant talons (120, 130) et des flancs (125, 225, 625, 925) s'étendant entre les parties formant talons et le sommet, la bande de roulement étant disposée sur le sommet du bandage pneumatique et définissant une région de roulement (175), et définissant au moins une paire de connecteurs opposés (145), chaque connecteur (145) faisant partie intégrante de la bande de roulement et étant placé sur une face latérale de la bande de roulement, le dispositif comportant :
au moins une paire d'éléments de fixation (150, 250, 350, 450, 650, 750, 850, 950), chaque dit élément de fixation étant attaché à l'un desdits connecteurs opposés de la bande de roulement ; et
au moins une membrane (155, 255, 355, 455, 555, 655, 755, 855, 955) reliée auxdits éléments de fixation et s'étendant sur au moins une partie des flancs du bandage pneumatique et s'éloignant de la bande de roulement sans croiser la région de roulement du bandage pneumatique.

2. Système comportant un dispositif pour maintenir une bande de roulement sur un bandage pneumatique pendant des opérations de rechapage selon la revendication 1, le bandage pneumatique définissant en outre un intérieur, et dans lequel ladite membrane s'étend sur les parties formant talons et à travers l'intérieur du bandage pneumatique.

3. Système comportant un dispositif pour maintenir une bande de roulement sur un bandage pneumatique pendant des opérations de rechapage selon la revendication 1 ou 2, dans lequel lesdits connecteurs opposés comprennent chacun une saillie (146) disposée le long d'une face latérale de la bande de roulement et s'étendant sur tout le pourtour du bandage pneumatique.

4. Système comportant un dispositif pour maintenir une bande de roulement sur un bandage pneumatique pendant des opérations de rechapage selon la revendication 1 ou 2, dans lequel lesdits connecteurs opposés comprennent chacun une sculpture (852) de bande de roulement conçue pour s'attacher par complémentarité à l'un desdits éléments de fixation.

5. Système comportant un dispositif pour maintenir une bande de roulement sur un bandage pneumatique pendant des opérations de rechapage selon la revendication 1 ou 2, dans lequel ladite paire d'éléments de fixation font corps avec ladite membrane.

6. Système comportant un dispositif pour maintenir une bande de roulement sur un bandage pneumatique pendant des opérations de rechapage selon la revendication 1 ou 2, dans lequel chaque connecteur de ladite paire de connecteurs opposés comprend une saillie s'étendant depuis la bande de roulement le long d'une face latérale de la bande de roulement, et dans lequel chacun desdits éléments de fixation comprend un élément en forme de crochet (750) destiné à s'attacher à ladite saillie.

7. Système comportant un dispositif pour maintenir une bande de roulement sur un bandage pneumatique pendant des opérations de rechapage selon la revendication 1 ou 2, dans lequel chaque connecteur de ladite paire de connecteurs opposés comprend un évidement ménagé le long de la bande de roulement, et dans lequel chacun desdits éléments de fixation comprend un doigt (851) destiné à être reçu dans ledit évidement.

8. Système comportant un dispositif pour maintenir une bande de roulement sur un bandage pneumatique pendant des opérations de rechapage selon la revendication 1 ou 2, comportant en outre au moins un anneau de retenue (751) s'étendant sur tout le pourtour du bandage pneumatique et attaché à au moins un connecteur de ladite paire de connecteurs opposés.

9. Système comportant un dispositif pour maintenir une bande de roulement sur un bandage pneumatique pendant des opérations de rechapage selon la revendication 1, dans lequel les d'éléments de fixation (150, 250, 350, 450, 650, 750, 850, 950) ne croisent pas le plan équatorial du bandage pneumatique (100, 200, 300, 600, 700, 800, 900).

10. Système comportant un dispositif pour maintenir une bande de roulement sur un bandage pneumatique pendant des opérations de rechapage selon la revendication 1, dans lequel la membrane (155, 255, 355, 455, 555, 655, 755, 855, 955) s'étend à travers le plan équatorial du bandage pneumatique (100, 200, 300, 600, 700, 800, 900).
